Europäisches Patentamt

European Patent Office

Office européen des brevets

(19)

(11) **EP 1 504 522 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(21) Anmeldenummer: **03711818.9**

(22) Anmeldetag: **11.02.2003**

(51) Int Cl.⁷: **H02P 9/30**, H02P 6/00

(86) Internationale Anmeldenummer:
**PCT/DE2003/000381**

(87) Internationale Veröffentlichungsnummer:
**WO 2003/094337 (13.11.2003 Gazette 2003/46)**

(54) **VERFAHREN UND VORRICHTUNG ZUR REGELUNG EINER PERMANENT-MAGNETERREGTEN SNCHRONMASCHINE MIT REDUZIERTEN LEISTUNGSPENDELUNGEN IM OBEREN DREHZAHLBEREICH**

METHOD AND DEVICE FOR THE REGULATION OF A PERMANENT-MAGNET EXCITED SYNCHRONOUS MACHINE HAVING REDUCED POWER OSCILLATIONS IN THE HIGHER ROTATIONAL SPEED RANGE

PROCEDE ET DISPOSITIF POUR REGLER UNE MACHINE SYNCHRONE A EXCITATION PAR AIMANT PERMANENT DONT LES OSCILLATIONS DE PUISSANCE SONT LIMITEES SUR LA PLAGE DES VITESSES DE ROTATION ELEVEES

(84) Benannte Vertragsstaaten:
**DE ES FR GB IT**

(30) Priorität: **03.05.2002 DE 10219821**

(43) Veröffentlichungstag der Anmeldung:
**09.02.2005 Patentblatt 2005/06**

(73) Patentinhaber: **ROBERT BOSCH GMBH**
**70442 Stuttgart (DE)**

(72) Erfinder:
• **EISENHARDT, Martin**
**71272 Renningen (DE)**
• **SEUFERT, Alexander**
**71706 Markgroeningen (DE)**
• **RECHBERGER, Klaus**
**71638 Ludwigsburg (DE)**

(56) Entgegenhaltungen:
EP-A- 1 187 307          DE-A- 10 023 908
DE-A- 10 035 783          DE-A- 19 928 481

**Beschreibung**

Stand der Technik

In der Kraftfahrzeugtechnik ist es bereits bekannt, in den Antriebsstrang eines Fahrzeugs zwischen dem Verbrennungsmotor und dem Getriebe eine permanentmagneterregte Synchronmaschine (PM-Synchronmaschine) als integrierten Kurbelwellenstartergenerator einzubauen.

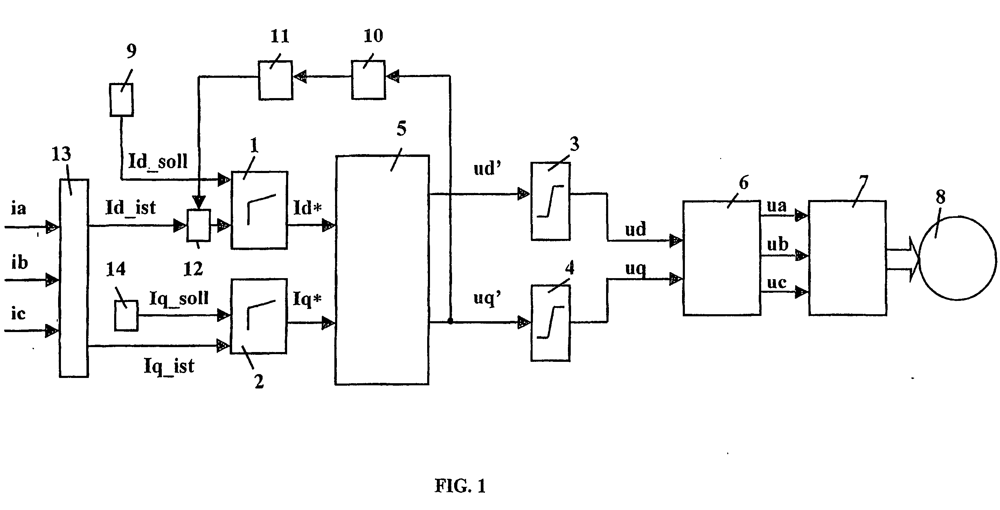

Die Regelung einer derartigen PM-Synchronmaschine erfolgt im rotorfeldorientierten Koordinatensystem. Ein Beispiel für eine feldorientierte Stromregelung einer PM-Synchronmaschine mit Pulswechselrichter ist in der Figur 1 gezeigt. Sie beruht auf einer Istwertmessung der Phasenströme eines 3-Phasen-Drehstromsystems und einer auf den gemessenen Istwerten beruhenden Ermittlung einer Längs- und einer Querkomponente der Regelspannung bezüglich der Rotorlage. Der Querstrom ist dabei proportional zum gewünschten Drehmoment.

Bei dieser Regelung werden die aus dem 3-Phasen-Drehstromsystem der PM-Maschine abgeleiteten Phasenströme ia, ib, ic in einem Park-Transformator 13 in die Ströme Id_ist und Iq_ist eines rechtwinkligen Koordinatensystems umgewandelt. Der Strom Id_ist stellt dabei den Istwert für den Längsstrom der Maschine dar. Der Strom Iq_ist bezeichnet den Istwert für den Querstrom der Maschine.

Der Längsstrom-Istwert Id_ist wird über ein Überlagerungsglied 12 einem Längsstromregler 1 zugeführt, der Querstrom-Istwert Iq_ist als Istwert einem Querstromregler 2. Das Überlagerungsglied 12 erhält als weiteres Eingangssignal ein Rückkopplungssignal, welches aus der Ausgangsgröße uq' eines stationären Entkopplungsnetzwerks 5 erhalten wird. Das stationäre Entkopplungsnetzwerk 5 erfüllt neben der für die Regelung wichtigen Entkopplung auch noch die Aufgabe, in Zusammenarbeit mit den Ausgangsbegrenzern 3 und 4 und einem Anti-Windup-Verfahren am Längsstromregler 1 eine Feldschwächung im oberen Drehzahlbereich zu erzielen. Diese Feldschwächung der PM-Synchronmaschine bei höheren Drehzahlen ist erforderlich, weil sonst die induzierte Maschinenspannung größer wäre als die maximale Stromrichterausgangsspannung. Letztere ist durch die Versorgungsspannung, bei der es sich um die Bordnetzspannung des Kraftfahrzeugs handelt, begrenzt. Bei diesem Feldschwächbetrieb wird der Stromrichter im übersteuerten Zustand betrieben, so dass die Stromrichterausgangsspannung nicht mehr sinusförmig ist.

Dem Sollwerteingang des Längsstromreglers 1 wird ein von einem Längsstrom-Sollwertgeber 9 generiertes Sollwertsignal und dem Sollwerteingang des Querstromreglers 2 ein von einem Querstrom-Sollwertgeber 14 generiertes Sollwertsignal zugeführt. Der Querstrom-Sollwertgeber 14 generiert das Querstrom-Sollwertsignal in Abhängigkeit vom Ausgangssignal eines Batteriespannungssensors.

Am Ausgang des Längsstromreglers 1 wird eine Stellgröße Id* für den Längsstrom und am Ausgang des Querstromreglers 2 eine Stellgröße Iq* für den Querstrom zur Verfügung gestellt. Diese Stellgrößen werden dem stationären Entkopplungsnetzwerk 5 zugeführt, welches unter Verwendung der genannten Stellgrößen eine Längsspannungskomponente ud' und eine Querspannungskomponente uq' für die Regelspannung der PM-Synchronmaschine ermittelt.

Diese Regelspannungskomponenten ud' und uq', bei denen es sich um Regelspannungskomponenten im rechtwinkligen Koordinatensystem handelt, werden über die Ausgangsbegrenzer 3 bzw. 4 einem inversen Park-Transformator 6 zugeführt. Dieser hat die Aufgabe, die im rechtwinkligen Koordinatensystem vorliegenden begrenzten Regelspannungskomponenten ud und uq in Regelspannungskomponenten ua, ub und uc des 3-Phasen-Drehstromsystems umzuwandeln. Diese werden in einem Pulswechselrichter 7 in Ansteuerimpulse für die PM-Synchronmaschine 8 umgewandelt.

Die am Ausgang des stationären Entkopplungsnetzwerks 5 ausgegebene Querspannungskomponente uq' der Regelspannung wird dem Betragsbildner 10 zugeführt, welcher den Betrag |uq'| der genannten Querspannungskomponente ermittelt.

Das Ausgangssignal des Betragsbildners 10 wird als Eingangssignal für einen Schwellwertschalter 11 verwendet. Überschreitet der Betrag |uq'| einen vorgegebenen Schwellenwert, dann wird am Ausgang des Schwellwertschalters 11 der Wert 0 ausgegeben. Unterschreitet der Betrag |uq'| den vorgegebenen Schwellenwert, dann wird am Ausgang des Schwellwertschalters 11 der Wert 1 ausgegeben.

Ausführungsbeispiele für die Ausgestaltung eines Entkopplungsnetzwerks, in welchem ein stationäres Maschinenmodell abgelegt ist, sind in der DE 100 44 181.5 der Anmelderin beschrieben.

Aus der DE 100 23 908 A1 ist ein Verfahren zur Ermittlung der Polradlage einer elektrischen Maschine bekannt, bei der es sich beispielsweise um einen Drehstromgenerator mit Pulswechselrichter handelt, wobei weiterhin eine Läuferwicklung, ein mit Induktivitäten versehener Ständer und eine zwischen zwei Strangklemmen angeordnete Spannungsquelle vorgesehen sind. Bei diesem Verfahren kann unter Verwendung von Schaltelementen in zwei Stränge verzweigt werden, in denen die jeweiligen Strangspannungsverläufe gemessen werden. Deren Überlagerung ermöglicht eine eindeutige Bestimmung der Polradlage. Beim bekannten Verfahren sind die Läuferpositionen für jeden der Spannungsverläufe tabellarisch abgelegt.

Weiterhin ist in der Zeitschrift ETEP, Vol. 8, No. 3, May/June 1998, Seiten 157 - 166, eine permanentmagneterregte Synchronmaschine mit Feldschwächbetrieb beschrieben, bei welcher ein großes Verhältnis von Maximal- zu Grundgeschwindigkeit vorliegt. Dies wird durch eine zusätzliche negative D-Komponente des Statorstromes erreicht. Im Rahmen der Regelung der bekannten Synchronmaschine wird eine Messung der Rotorposition unter Verwendung der Ausgangssignale von drei Hall-Sensoren durchgeführt, wobei ein Hall-Sensor jeweils einer der Phasen U, V, W zugeordnet ist.

Aus der DE 199 28 481 A1 ist ein Verfahren zur Erzeugung von Stellgrößen für die Längs- bzw. Querspannung zur Darstellung des flussbildenden Stroms und des drehmomentbildenden Strom bei einer feldorientierten Regelung von Drehfeldmaschinen unter Berücksichtigung des Ständerspannungsabfalls und der Hauptfeldspannung bekannt, bei welchem die Hauptfeldspannung auf der Grundlage von Sollgrößen der Ströme berechnet wird. Weiterhin sind aus dieser Druckschrift ein Verfahren zur Ermittlung der Rotorkreisfrequenz einer feldorientiert geregelten Asynchronmaschine sowie ein Verfahren zur Erfassung und Paarung wenigstens zweier Strangströme einer Asynchronmaschine zur Durchführung einer feldorientierten Regelung bekannt.

Vorteile der Erfindung

Durch die Erfindung wird ein Regelungssystem zur Verfügung gestellt, bei welchem die bei bekannten Systemen im oberen Drehzahlbereich auftretenden Leistungspendelungen reduziert sind. Die Erfindung ermöglicht eine einfache Stromrichtersteuerung über einen großen Drehzahlbereich.

Dies wird dadurch erreicht, dass aufgrund des ruckfreien Überganges von einem PWM-Betrieb in einen Blockbetrieb beim Erreichen eines vorgegebenen Drehzahlschwellenwertes sich aufgrund des Verhältnisses von Stromgrundschwingung zu Pulsfrequenz ergebende Winkelungenauigkeiten bezüglich des Soll-Spannungsnulldurchgangs und des tatsächlich geschalteten Spannungsnulldurchgangs reduziert werden.

Die bei der Erfindung benötigte Recheneinheit verursacht nur eine geringe zusätzliche Prozessorbelastung, da die Recheneinheit drehzahlunabhängig mit der konstanten Regelfrequenz arbeiten kann. Die Schaltfrequenz des Stromrichters bleibt klein, so dass auch dessen Schaltverluste gering gehalten werden.

Zeichnung

Die beiliegenden Figuren dienen der beispielhaften Erläuterung der Erfindung. Die Figur 1 zeigt ein Blockschaltbild einer herkömmlichen feldorientierten Stromregelung einer PM-Synchronmaschine. Die Figur 2 zeigt ein Blockschaltbild eines ersten Ausführungsbeispiels einer erfindungsgemäßen feldorientierten Stromregelung einer PM-Synchronmaschine. Die Figur 3 zeigt ein Diagramm zur Veranschaulichung der Abhängigkeit der Stromgrundschwingungsfrequenz von der Drehzahl. Die Figur 4 zeigt ein Diagramm zur Veranschaulichung des maximalen Winkelfehlers in Abhängigkeit von der Drehzahl. Die Figur 5 zeigt ein Blockschaltbild eines zweiten Ausführungsbeispiels einer erfindungsgemäßen feldorientierten Stromregelung einer PM-Synchronmaschine.

Beschreibung des Ausführungsbeispiels

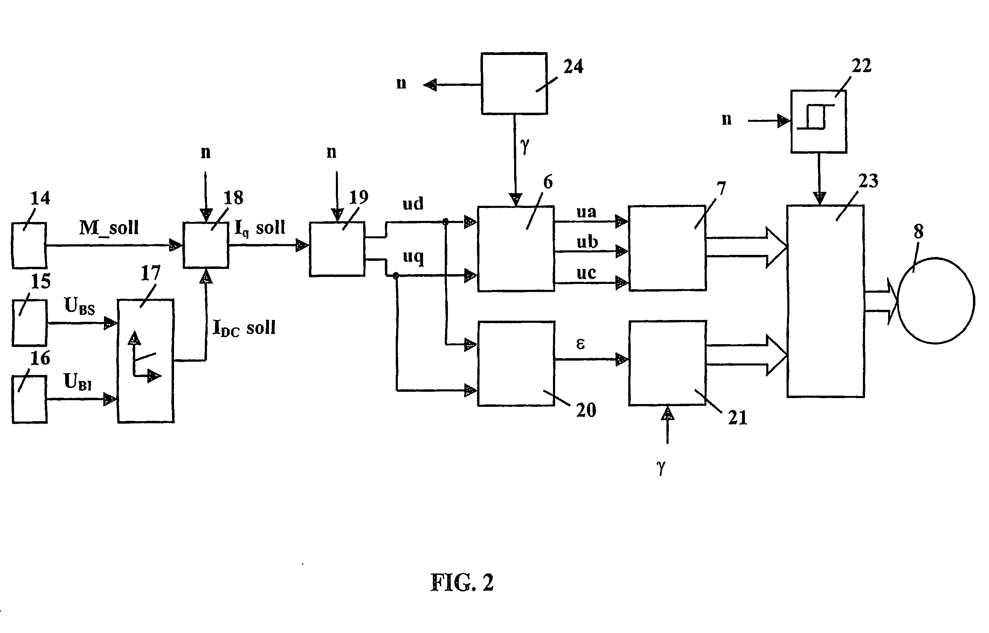

Die Figur 2 zeigt ein Blockschaltbild eines ersten Ausführungsbeispiels einer erfindungsgemäßen feldorientierten Stromregelung einer PM-Synchronmaschine 8. Bei dieser Regelung ist es nicht notwendig, aus dem Mehrphasen-Drehstromsystem der PM-Maschine Phasenströme abzuleiten und mittels eines Park-Transformators in den Längsstrom-Istwert und den Querstrom-Istwert eines rechtwinkligen Koordinatensystems umzuwandeln.

Die in der Figur 2 dargestellte Vorrichtung weist eine Logikeinheit 18 auf, die an ihrem Ausgang einen Sollwert Iq_soll für den Querstrom zur Verfügung stellt. Weiterhin ist die Logikeinheit 18 mit mehreren Eingängen versehen. Ein erster Eingang der Logikeinheit 18 ist mit einem übergeordneten Steuergerät 14 verbunden. Ein zweiter Eingang der Logikeinheit 18 ist an den Ausgang eines Batteriespannungsreglers 17 angeschlossen. Dem dritten Eingang der Logikeinheit 18 wird eine Information über die Drehzahl n der Maschine zugeleitet.

Der Batteriespannungsregler 17 ist eingangsseitig mit einem Batteriespannungssollwertgeber 15 und einem Batteriespannungssensor 16 verbunden. Der Batteriespannungssollwertgeber 15, beispielsweise ein übergeordnetes Energiemanagement, liefert dem Batteriespannungsregler 17 die Batteriesollspannung $U_{BS}$. Der Batteriespannungssensor 16 ist zur Messung der Batterieistspannung $U_{BI}$ vorgesehen. Die Batterieistspannung wird beispielsweise an einem nichtgezeichneten Zwischenkreiskondensator abgegriffen.

Der Startvorgang verläuft wie folgt: Vom übergeordneten Steuergerät 14 kommt ein Startbefehl, welcher eine Information über das Solldrehmoment M_soll enthält. Aus diesem wird in der Logikeinheit 18 der Querstrom-Sollwert Iq_soll abgeleitet. Der Querstrom-Sollwert Iq_soll wird dem stationären Entkopplungsnetzwerk 19 zugeführt, welches ein stationäres Maschinenmodell enthält. In diesem Entkopplungsnetzwerk wird der Querstrom-Sollwert mit Einbeziehung der Drehzahl n und des abgespeicherten Maschinenmodells in eine Längsspannungskomponente ud und eine Querspannungskomponente uq der Regelspannung umgesetzt.

Dabei wird von einer abgespeicherten Tabelle Gebrauch gemacht, in welcher Maschinenparameter berücksichtigt sind. Je nach Genauigkeit des Maschinenmodells treten bei dieser Umsetzung mehr oder weniger große Einbußen an Performance auf.

Ab einem vorgegebenen Drehzahlschwellenwert, der beispielsweise bei 500 Umdrehungen pro Minute liegt, führt die Umschaltlogik 18 einen Umschaltvorgang durch, aufgrund dessen nunmehr das Ausgangssignal $I_{DC\_}$soll des Batteriespannungsreglers 17 als Querstrom-Sollwert Iq_soll an das Entkopplungsnetzwerk 19 weitergeleitet wird. In diesem wird der Querstrom-Sollwert mit Einbeziehung der Drehzahl n in eine Längsspannungskomponente ud und eine Querspannungskomponente uq der Regelspannung umgesetzt. Auch dabei wird von der abgespeicherten Tabelle Gebrauch gemacht, in welcher Maschinenparameter berücksichtigt sind. Ungenauigkeiten im Maschinenmodell werden durch die übergeordnete Spannungsregelung kompensiert und führen im Generatorbetrieb zu keinem Wirkungsgradverlust.

Die mittels des stationären Maschinenmodells ermittelten Spannungskomponenten ud und uq, bei denen es sich um Regelspannungskomponenten im rechtwinkligen Koordinatensystem handelt, werden einem inversen Park-Transformator 6 zugeführt. Dieser hat die Aufgabe, die im rechtwinkligen Koordinatensystem vorliegenden Regelspannungskomponenten ud und uq unter Berücksichtigung des Polradwinkels γ, der von einem Lagegeber 24 ermittelt wird, in Regelspannungskomponenten ua, ub und uc des 3-Phasen-Drehstromsystems umzuwandeln. Diese werden an einen Pulswechselrichter 7 weitergeleitet, welcher an seinem Ausgang Ansteuerimpulse für die PM-Synchronmaschine 8 zur Verfügung stellt. Der Ausgang des Pulswechselrichters 7 ist über eine Schalteinheit 23 mit der zu steuernden PM-Maschine 8 verbunden.

Die Spannungskomponenten ud und uq werden weiterhin einer Recheneinheit 20 zugeführt, die aus diesen Spannungskomponenten den Sollwinkel ε zwischen der Rotorpolachse und dem Soll-Statorspannungsraumzeiger ermittelt. Dies geschieht gemäß der folgenden Beziehung:

$$\varepsilon = \arctan \frac{ud}{uq}.$$

Da bei der feldorientierten Regelung Gleichgrößen mit einer über den gesamten Regelbereich gleichen Zeitkonstante geregelt werden, arbeitet die Recheneinheit 20 mit der gleichen Taktfrequenz wie die Regelung.

Das Ausgangssignal der Recheneinheit 20 wird einem Blockschaltwerk 21 zugeführt, welches direkt vom Polradwinkel γ getaktet wird. Informationen über den Polradwinkel werden - wie bereits oben ausgeführt wurde - beispielsweise mittels eines Lagegebers 24 gewonnen. Das Blockschaltwerk 21, dessen Ausgangssignal ebenfalls der Umschaltlogik 23 zugeführt wird, dient zur Auswahl von Ansteuerimpulsen gemäß eines von sechs möglichen Schaltzuständen des Stromrichters.

Anstelle eines Blockschaltwerkes kann auch ein dem Blockschaltwerk funktionell entsprechendes Softwareprogramm verwendet werden.

In der Umschaltlogik 23 erfolgt eine Umschaltung in dem Sinne, dass entweder die im Pulswechselrichter 7 oder die im Blockschaltwerk 21 generierten Ansteuerimpulse an die PM-Maschine 8 weitergeleitet werden. Diese Umschaltung erfolgt in Abhängigkeit von der Drehzahl n unter Berücksichtigung einer einstellbaren Schalthysterese, die mittels der Hystereseschaltung 22 realisiert wird. Der Hysteresebereich liegt beispielsweise zwischen 800 und 1000 Umdrehungen pro Minute.

Mit einer derartigen Ansteuerung wird ein ruckfreier Übergang vom Pulswechselrichterbetrieb, in welchem die Ausgangssignale des Schaltungsblockes 7 über die Umschaltlogik 23 an die PM-Maschine 8 weitergeleitet werden, in den Blockbetrieb, in welchem die Ausgangssignale des Blockschaltwerks 21 über die Umschaltlogik 23 an die PM-Maschine 8 weitergeleitet werden, sichergestellt. Dies ist darauf zurückzuführen, dass für den gesamten Drehzahlbereich dieselbe Reglerstruktur verwendet wird und dass bei der Umschaltdrehzahl das Ausgangssignal des Blockschaltwerks 21 gleich dem Ausgangssignal des Pulswechselrichters 7 ist, wobei das Ausgangssignal des Pulswechselrichters 7 mit einer statistischen Winkelungenauigkeit bzw. einem Jitter behaftet ist, welcher mit steigender Drehzahl größer wird und zu unerwünschten Leistungspendelungen im oberen Drehzahlbereich führt.

Der vorstehend beschriebene Übergang vom Pulswechselrichterbetrieb in den Blockbetrieb wird vorgenommen, um diese unerwünschten Leistungspendelungen im oberen Drehzahlbetreich zu vermeiden.

Diese beim Stand der Technik auftretenden Leistungspendelungen im oberen Drehzahlbereich beruhen darauf, dass die Schaltfrequenz des Pulswechselrichters bzw. PWM-Umrichters im Hinblick auf auftretende Verluste nicht zu groß gewählt werden darf. Für den Anwendungsfall in einem Kurbelwellenstartergenerator wird deshalb mit einer PWM-Frequenz von beispielsweise 8 kHz gearbeitet. Der Zusammenhang zwischen der Drehzahl und der Stromgrundschwingungsfrequenz lautet wie folgt:

$$f = \frac{n}{60} \cdot p.$$

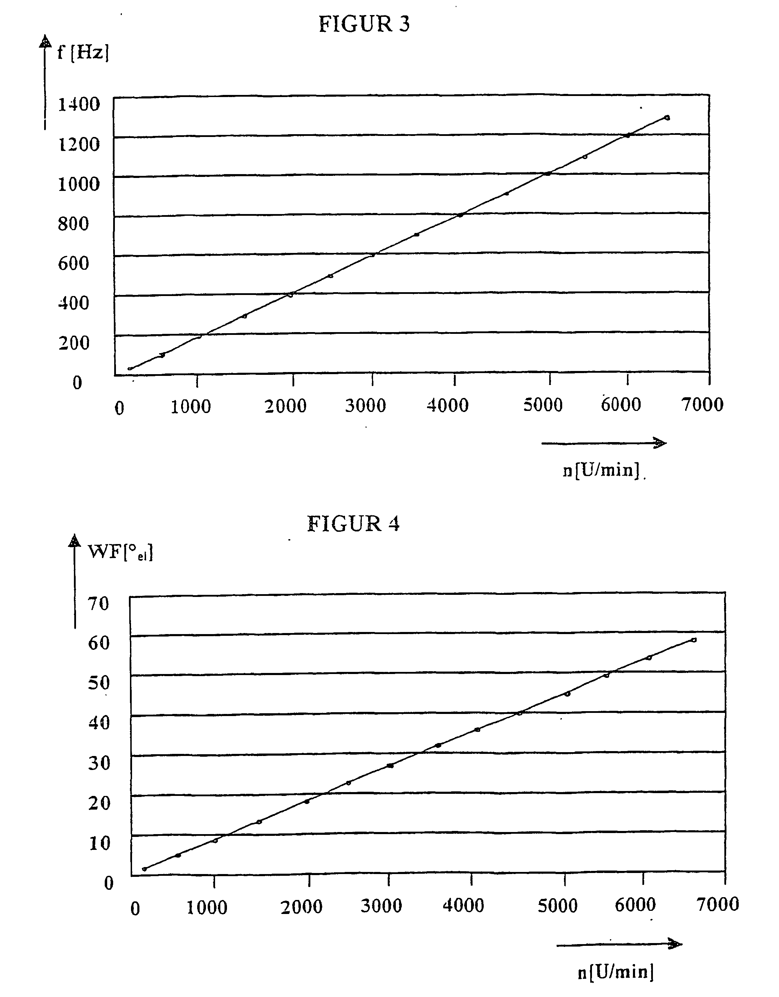

Für den Drehzahlbereich eines 2 · p = 24-poligen Kurbelwellenstartergenerators, dessen Drehzahlbereich zwischen 0 und 6500 Umdrehungen pro Minute liegt, ist damit ein Frequenzbereich von 0 - 1300 Hertz erforderlich. Dies ist in der Figur 3 gezeigt, welche ein Diagramm zur Veranschaulichung der Abhängigkeit der Stromgrundschwingungsfrequenez von der Drehzahl zeigt. In diesem Diagramm ist auf der Abszisse die Drehzahl n in Umdrehungen pro Minute und auf der Ordinate die Frequenz f in Hertz aufgetragen.

Da über den gesamten Betriebsbereich eine PWM-Frequenz von 8 kHz vorliegt, ergibt sich aufgrund des Verhältnisses von Stromgrundschwingung zu Pulsfrequenz eine Winkelungenauigkeit bezüglich des Soll-Spannungsnulldurchgangs und des tatsächlich geschalteten Spannungsnulldurchgangs. Dies ist in der Figur 4 gezeigt, welche für eine PWM-Frequenz von 8 kHz ein Diagramm zur Veranschaulichung des maximalen Winkelfehlers bezogen auf den Soll-Spannungsnulldurchgang in Abhängigkeit von der Drehzahl zeigt. In diesem Diagramm ist auf der Abszisse die Drehzahl n in Umdrehungen pro Minute und auf der Ordinate der Winkel-Fehler WF in Grad aufgetragen.

Diese statistische Ungenauigkeit bzw. dieser Jitter führt zu unerwünschten Leistungspendelungen im oberen Drehzahlbereich. Um diese statistische Ungenauigkeit zu vermeiden, erfolgt gemäß dem oben anhand der Figur 2 beschriebenen Ausführungsbeispiel eine drehzahlabhängige Umschaltung bzw. ein drehzahlabhängiger Übergang von einem PWM-Betrieb in einen Blockbetrieb. Alternativ dazu könnten die genannten Leistungspendelungen auch durch eine Erhöhung der PWM-Frequenzen, beispielsweise auf Schaltfrequenzen bis zu 90 kHz, vermieden werden. Dies ist aber wegen hoher Schaltverluste und wegen des hohen Stromrichteraufwandes nicht sinnvoll.

Weitere Vorteile des in der Figur 2 gezeigten Ausführungsbeispiels bestehen darin, dass nur eine geringe zusätzliche Prozessorbelastung vorliegt, da die Recheneinheit 20 drehzahlunabhängig mit der konstanten Regelfrequenz arbeiten kann. Im Falle eines PWM-Betriebes über den gesamten Regelbereich müsste die PWM-Frequenz und damit die Frequenz für die inverse Park-Transformation mit der Drehzahl erhöht werden, was eine große Prozessorbelastung zur Folge hätte.

Weiterhin ist die Schaltfrequenz des Stromrichters klein. Damit verbunden sind niedrige Schaltverluste des Stromrichters.

Ferner werden die auf eine PWM-Taktung zurückzuführenden Winkelungenauigkeiten eliminiert und damit auch die auf diese zurückzuführenden unerwünschten Leistungspendelungen. Die Winkelgenauigkeit hängt nur vom Lagegeber selbst ab.

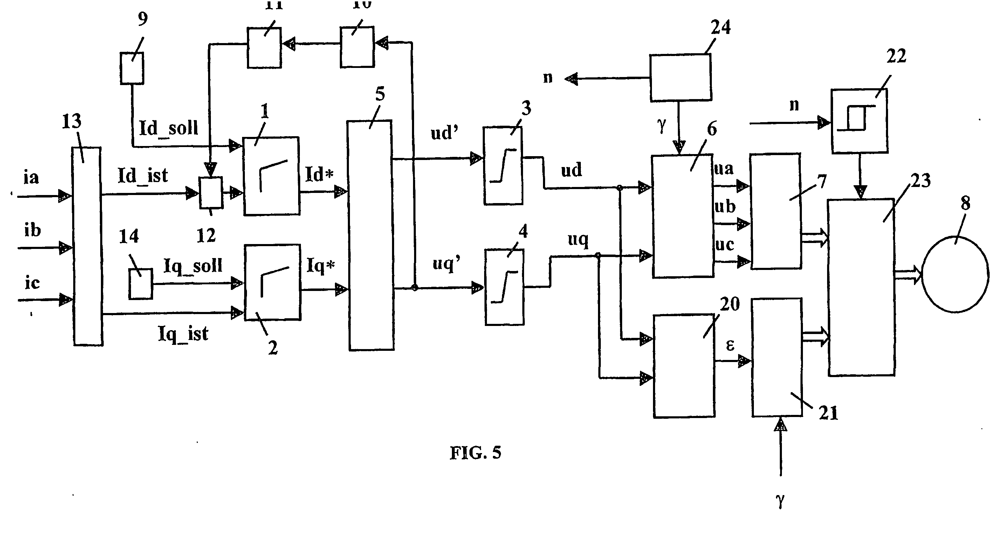

Die Figur 5 zeigt ein Blockschaltbild eines zweiten Ausführungsbeispiels einer erfindungsgemäßen feldorientierten Stromregelung einer PM-Synchronmaschine.

Dieses Ausführungsbeispiel unterscheidet sich von dem in der Figur 2 gezeigten ersten Ausführungsbeispiel in der Art und Weise, wie die Längskomponente ud und die Querkomponente uq der Regelspannung für die PM-Synchronmaschine generiert werden. Dies geschieht bei dem in der Figur 5 gezeigten Ausführungsbeispiel wie folgt:

Die aus dem 3-Phasen-Drehstromsystem der PM-Maschine abgeleiteten Phasenstöme ia, ib, ic werden in einem Park-Transformator 13 in die Ströme Id_ist und Iq_ist eines rechtwinkligen Koordinatensystems umgewandelt. Der Strom Id_ist stellt dabei den Istwert für den Längsstrom der Maschine dar. Der Strom Iq_ist bezeichnet den Istwert für den Querstrom der Maschine.

Der Längsstrom-Istwert Id_ist wird über ein Überlagerungsglied 12 einem Längsstromregler 1 zugeführt, der Querstrom-Istwert Iq_ist als Istwert einem Querstromregler 2. Das Überlagerungsglied 12 erhält als weiteres Eingangssignal ein Rückkopplungssignal, welches aus der Ausgangsgröße uq' eines stationären Entkopplungsnetzwerks 5 erhalten wird. Das stationäre Entkopplungsnetzwerk 5 erfüllt neben der für die Regelung wichtigen Entkopplung auch noch die Aufgabe, in Zusammenarbeit mit den Ausgangsbegrenzern 3 und 4 und einem Anti-Windup-Verfahren am Längsstromregler 1 eine Feldschwächung im oberen Drehzahlbereich zu erzielen. Diese Feldschwächung der PM-Synchronmaschine bei höheren Drehzahlen ist erforderlich, weil sonst die induzierte Maschinenspannung größer wäre als die maximale Stromrichterausgangsspannung. Letztere ist durch die Versorgungsspannung, bei der es sich um die Bordnetzspannung des Kraftfahrzeugs handelt, begrenzt. Bei diesem Feldschwächbetrieb wird der Stromrichter im übersteuerten Zustand betrieben, so dass die Stromrichterausgangsspannung nicht mehr sinusförmig ist.

Dem Sollwerteingang des Längsstromreglers 1 wird ein von einem Längsstrom-Sollwertgeber 9 generiertes Sollwertsignal und dem Sollwerteingang des Querstromreglers 2 ein von einem Querstrom-Sollwertgeber 14 generiertes Sollwertsignal zugeführt. Der Querstrom-Sollwertgeber 14 generiert das Querstrom-Sollwertsignal in Abhängigkeit vom Ausgangssignal eines Batteriespannungssensors.

Am Ausgang des Längsstromreglers 1 wird eine Stellgröße Id* für den Längsstrom und am Ausgang des Querstromreglers 2 eine Stellgröße Iq* für den Querstrom zur Verfügung gestellt. Diese Stellgrößen werden dem stationären Entkopplungsnetzwerk 5 zugeführt, welches unter Verwendung der genannten Stellgrößen eine Längsspannungskomponente ud' und eine Querspannungskomponente uq' für die Regelspannung der PM-Synchronmaschine ermittelt.

Diese Regelspannungskomponenten ud' und uq', bei denen es sich um Regelspannungskomponenten im rechtwinkligen Koordinatensystem handelt, werden über die Ausgangsbegrenzer 3 bzw. 4 in eine begrenzte Längsspannungskomponente ud und eine begrenzte Querspannungskomponente uq umgesetzt.

Die am Ausgang des stationären Entkopplungsnetzwerks 5 ausgegebene Querspannungskomponente uq' der Regelspannung wird dem Betragsbildner 10 zugeführt, welcher den Betrag |uq'| der genannten Querspannungskomponente ermittelt.

Das Ausgangssignal des Betragsbildners 10 wird als Eingangssignal für einen Schwellwertschalter 11 verwendet. Überschreitet der Betrag |uq'| einen vorgegebenen Schwellenwert, dann wird am Ausgang des Schwellwertschalters 11 der Wert 0 ausgegeben. Unterschreitet der Betrag |uq'| den vorgegebenen Schwellenwert, dann wird am Ausgang des Schwellwertschalters 11 der Wert 1 ausgegeben.

Die Weiterverarbeitung der Längskomponente ud und der Querkomponente uq der Regelspannung zum Erhalt von Ansteuerimpulsen für die PM-Synchronmaschine erfolgt so, wie es oben im Zusammenhang mit dem ersten Ausführungsbeispiel beschrieben wurde.

Bezugszeichenliste

| | |
|---|---|
| 1 | Längsstromregler |
| 2 | Querstromregler |
| 3 | Begrenzer |
| 4 | Begrenzer |
| 5 | Entkopplungsnetzwerk |
| 6 | Inverser Park-Transformator |
| 7 | Pulswechselrichter |
| 8 | PM-Synchronmaschine |
| 9 | Längsstrom-Sollwertgeber |
| 10 | Betragsbildner |
| 11 | Schwellwertschalter |
| 12 | Überlagerungsglied |
| 13 | Park-Transformator |
| 14 | übergeordnete Steuerung (Motorsteuergerät) |
| 15 | Batteriespannungs-Sollwertgeber |
| 16 | Batteriespannungssensor |
| 17 | Batteriespannungsregler |
| 18 | Logikeinheit |
| 19 | Entkopplungsnetzwerk mit stationärem Maschinenmodell |
| 20 | Recheneinheit |
| 21 | Blockschaltwerk |
| 22 | Hystereseschaltung |
| 23 | Umschaltlogik |
| 24 | Lagegeber für Polradwinkel |
| ia, ib, ic | Phasenströme aus dem 3-Phasen-Drehstromsystem |
| Id_ist | Längsstrom-Istwert |
| Id_soll | Längsstrom-Sollwert |
| Iq_ist | Querstrom-Istwert |
| Iq_soll | Querstrom-Sollwert |
| Id* | Stellgröße für den Längsstrom |
| $I_{DC}$_soll | Querstrom-Sollwert vom Batteriespannungsregler |
| Iq* | Stellgröße für den Querstrom |
| M_soll | Solldrehmoment |
| n | Drehzahl |
| ua, ub, uc | Regelspannungen für das 3-Phasen-Drehstromsystem |
| $U_{BS}$ | Batteriespannungs-Sollwert |
| $U_{BI}$ | Batteriespannungs-Istwert |
| ud, ud' | Längskomponenten der Regelspannung |
| uq, uq' | Querkomponenten der Regelspannung |
| WF | Winkelfehler |
| ε | Sollwinkel |
| γ | Polradwinkel |

**Patentansprüche**

1. Verfahren zur feldorientierten Regelung einer permanentmagneterregten Synchronmaschine mit folgenden Verfahrensschritten:

   - Ermittlung einer Längsspannungskomponente (ud) und einer Querspannungskomponente (uq) der Regelspannung und
   - Umwandlung der ermittelten Längsspannungskomponente und der ermittelten Querspannungskomponente in Ansteuerimpulse für die Synchronmaschine, wobei
   - in einem niedrigen Drehzahlbereich die Umwandlung der ermittelten Längsspannungskomponente und der ermittelten Querspannungskomponente in Ansteuerimpulse für die Synchronmachine unter Verwendung eines Pulswechselrichters (7) vorgenommen wird und
   - in einem hohen Drehzahlbereich unter Verwendung eines Blockschaltwerkes (21) oder eines einem Blockschaltwerk funktionell entsprechenden Softwareprogrammes in Abhängigkeit von dem Sollwinkel (ε) zwischen der Rotorpolachse und dem Soll-Statorspannungsraumzeiger vorgenommen wird.

2. Verfahren nach Anspruch 1, **dadurch gekennzeichnet, dass** der Sollwinkel (ε) aus der ermittelten Längsspannungskomponente und der ermittelten Querspannungskomponente gemäß der folgenden Beziehung ermittelt wird:

$$\varepsilon = \arctan \frac{ud}{uq}.$$

3. Verfahren nach Anspruch 1 oder 2, **dadurch gekennzeichnet, dass** im Blockschaltwerk oder unter Verwendung des dem Blockschaltwerk entsprechenden Softwareprogrammes eine Auswahl eines von mehreren möglichen Schaltzuständen des Stromrichters vorgenommen wird.

4. Verfahren nach Anspruch 3, **dadurch gekennzeichnet, dass** die Auswahl eines von mehreren möglichen Schaltzuständen des Stromrichters unter Berücksichtigung des Rotorlagewinkels (γ) erfolgt.

5. Verfahren nach einem der vorhergehenden Ansprüche, **dadurch gekennzeichnet, dass** eine drehzahlabhängige Umschaltung zwischen den Ausgangssignalen des Pulswechselrichters (7) und den Ausgangssignalen des Blockschaltwerks (21) oder den mittels des Softwareprogrammes erzeugten Ansteuersignale vorgenommen wird.

**6.** Verfahren nach Anspruch 5, **dadurch gekennzeichnet, dass** die drehzahlabhängige Umschaltung unter Berücksichtigung einer Schalthysterese vorgenommen wird.

**7.** Vorrichtung zur feldorientierten Regelung einer permanentmagneterregten Synchronmaschine, welche Vorrichtung aufweist:

- Schaltungsmittel (17, 18, 19; 1 - 5, 10 - 12) zur Ermittlung einer Längsspannungskomponente (ud) und einer Querspannungskomponente (uq) der Regelspannung,
- erste Mittel (6, 7) zur Umwandlung der ermittelten Längsspannungskomponente (ud) und der ermittelten Querspannungskomponente (uq) in Ansteuerimpulse für die Synchronmaschine, die einen Pulswechselrichter (7) aufweisen,
- zweite Mittel (20, 21) zur Umwandlung der ermittelten Längsspannungskomponente (ud) und der ermittelten Querspannungskomponente (uq) in Ansteuerimpulse für die Synchronmaschine, die ein Blockschaltwerk (21) oder ein einem Blockschaltwerk funktionell entsprechendes Softwareprogramm aufweisen und zur Umwandlung in Abhängigkeit von dem Sollwinkel (ε) zwischen der Rotorpolachse und dem Soll-Statorspannungsraumzeiger vorgesehen sind, und
- eine Umschalteinheit (23), die in Abhängigkeit von der Drehzahl entweder vom Pulswechselrichter (7) oder vom Blockschaltwerk (21) oder mittels des Softwareprogrammes generierte Ansteuerimpulse an ihrem Ausgang bereitstellt.

**8.** Vorrichtung nach Anspruch 7, **dadurch gekennzeichnet, dass** sie eine Recheneinheit (20) aufweist, welche einen Eingang für die ermittelte Längsspannungskomponente (ud), einen Eingang für die ermittelte Querspannungskomponente (uq) und einen Ausgang für eine Information über den Sollwinkel (ε) zwischen der Rotorpolachse und dem Soll-Statorspannungsraumzeiger besitzt.

**9.** Vorrichtung nach Anspruch 8, **dadurch gekennzeichnet, dass** die Recheneinheit (20) den Sollwinkel (ε) gemäß der folgenden Beziehung ermittelt:

$$\varepsilon = \arctan\frac{ud}{uq} \; .$$

**10.** Vorrichtung nach einem der Ansprüche 7 - 9, **dadurch gekennzeichnet, dass** das Blockschaltwerk (21) oder das Softwareprogramm zur Auswahl eines von mehreren Schaltzuständen des Stromrichters vorgesehen ist.

**11.** Vorrichtung nach Anspruch 10, **dadurch gekennzeichnet, dass** die Auswahl eines von mehreren möglichen Schaltzuständen des Stromrichters unter Berücksichtung des Rotorlagewinkels (γ) erfolgt.

**12.** Vorrichtung nach einem der Ansprüche 7 - 11, **dadurch gekennzeichnet, dass** sie eine Hystereschaltung (22) aufweist, deren Ausgangssignal der Umschalteinheit (23) als Schaltsignal zugeführt ist.

**Claims**

**1.** Method for the field-oriented control of a synchronous machine with permanent-magnet excitation, which comprises the following method steps:

- determination of an in-phase voltage component (ud) and a quadrature voltage component (uq) of the control voltage, and
- conversion of the determined in-phase voltage component and the determined quadrature voltage component into drive pulses for the synchronous machine, wherein
- in a low rotational-speed range, the determined in-phase voltage component and the determined quadrature voltage component are converted into drive pulses for the synchronous machine using a pulse-controlled inverter (7) and
- in a high rotational-speed range, said conversion is carried out using a block switching mechanism (21) or a software program which corresponds to a block switching mechanism in functional terms, as a function of the desired angle (ε) between the rotor pole axis and the desired stator voltage space vector.

**2.** Method according to Claim 1, **characterized in that** the desired angle (ε) is determined from the determined in-phase voltage component and the determined quadrature voltage component in accordance with the following equation:

$$\varepsilon = \arctan\frac{ud}{uq} \; .$$

**3.** Method according to Claim 1 or 2, **characterized in that** one of a plurality of possible switching states of the converter is selected in the block switching mechanism or using the software program which corresponds to the block switching mechanism.

**4.** Method according to Claim 3, **characterized in that** one of the plurality of possible switching states of the converter is selected taking into account the rotor position angle ($\gamma$).

5. Method according to one of the preceding claims, **characterized in that** a changeover is made, as a function of the rotational speed, between the output signals from the pulse-controlled inverter (7) and the output signals from the block switching mechanism (21) or the drive signals, which are generated by means of the software program.

6. Method according to Claim 5, **characterized in that** the rotational speed-dependent changeover is made taking into account a switching hysteresis.

7. Apparatus for the field-oriented control of a synchronous machine with permanent-magnet excitation, the apparatus comprising:

   - circuit means (17, 18, 19; 1-5, 10-12) for determining an in-phase voltage component (ud) and a quadrature voltage component (uq) of the control voltage,
   - first means (6, 7) for converting the determined in-phase voltage component (ud) and the determined quadrature voltage component (uq) into drive pulses for the synchronous machine, these first means having a pulsed-controlled inverter (7),
   - second means (20, 21) for converting the determined in-phase voltage component (ud) and the determined quadrature voltage component (uq) into drive pulses for the synchronous machine, these second means having a block switching mechanism (21) or a software program which corresponds to a block switching mechanism in functional terms and being provided for conversion as a function of the desired angle ($\varepsilon$) between the rotor pole axis and the desired stator voltage space vector, and
   - a changeover unit (23) at whose output drive pulses are provided, which are generated either by the pulse-controlled inverter (7) or by the block switching mechanism (21) or by means of the software program, as a function of the rotational speed.

8. Apparatus according to Claim 7, **characterized in that** it has a calculation unit (20) which has one input for the determined in-phase voltage component (ud), one input for the determined quadrature voltage component (uq), and one output for an item of information about the desired angle ($\varepsilon$) between the rotor pole axis and the desired stator voltage space vector.

9. Apparatus according to Claim 8, **characterized in that** the calculation unit (20) determines the desired

angle ($\varepsilon$) in accordance with the following equation:

$$\varepsilon = \arctan\frac{ud}{uq}.$$

10. Apparatus according to one of Claims 7-9, **characterized in that** the block switching mechanism (21) or the software program is provided for selecting one of a plurality of switching states of the converter.

11. Apparatus according to Claim 10, **characterized in that** one of a plurality of possible switching states of the converter is selected taking into account the rotor position angle ($\gamma$).

12. Apparatus according to one of Claims 7-11, **characterized in that** it has a hysteresis circuit (22) whose output signal is supplied to the changeover unit (23) as switching signal.

**Revendications**

1. Procédé de régulation orientée champ d'une machine synchrone à excitation par aimant permanent avec les étapes de procédé suivantes :

   - détermination d'une composante de tension longitudinale (ud) et d'une composante de tension transversale (uq) de la tension de régulation, et
   - conversion des composantes de tension longitudinale et transversale déterminées en impulsions de commande pour la machine synchrone, selon lequel
   - la conversion des composantes de tension longitudinale et transversale déterminées en impulsions de commande pour la machine synchrone est effectuée en utilisant un onduleur d'impulsions (7) dans une plage de vitesses de rotation inférieure, et
   - dans une plage de vitesses de rotation supérieure on utilise un bloc commutateur (21) ou un programme logiciel correspondant fonctionnellement à un bloc commutateur en fonction de l'angle de consigne ($\varepsilon$) entre l'axe polaire de rotor et l'indicateur d'espace de tension de stator de consigne.

2. Procédé selon la revendication 1, **caractérisé en ce que** l'angle de consigne ($\varepsilon$) des composantes de tension longitudinale et transversale déterminées est calculé selon la relation suivante :

$$\varepsilon = \arctan\frac{ud}{uq}.$$

**3.** Procédé selon la revendication 1 ou 2, **caractérisé en ce que** dans le bloc commutateur ou en utilisant le programme logiciel correspondant à celui-ci, un état de commutation du convertisseur parmi plusieurs possibles est sélectionné.

**4.** Procédé selon la revendication 3, **caractérisé en ce que** la sélection d'un état de commutation du convertisseur parmi plusieurs possibles s'effectue en tenant compte de l'angle de position de rotor ($\gamma$).

**5.** Procédé selon l'une quelconque des revendications précédentes, **caractérisé en qu'** une commutation en fonction de la vitesse de rotation est effectuée entre les signaux de sortie de l'onduleur d'impulsions (7) et les signaux de sortie du bloc commutateur (21) ou les signaux de commande générés au moyen du programme logiciel.

**6.** Procédé selon la revendication 5, **caractérisé en ce que** la commutation en fonction de la vitesse de rotation est effectuée en tenant compte d'une hystérèse de commutation.

**7.** Dispositif pour la régulation orientée champ d'une machine synchrone à excitation par aimant permanent, comprenant :

- des moyens de commutation (17, 18, 19 ; 1 à 5, 10 à 12) pour déterminer une composante de tension longitudinale (ud) et une composante de tension transversale (uq) de la tension de régulation,
- des premiers moyens (6, 7) pour convertir les composantes de tension longitudinale et transversale (ud, uq) déterminées en impulsions de commande pour la machine synchrone, qui présentent un onduleur d'impulsions (7),
- des seconds moyens (20, 21) pour convertir les composantes de tension longitudinale et transversale (ud, uq) déterminées en impulsions de commande pour la machine synchrone, qui présentent un bloc commutateur (21) ou un programme logiciel correspondant fonctionnellement à un bloc commutateur et pour la conversion en fonction de l'angle de consigne ($\varepsilon$) entre l'axe polaire de rotor et l'indicateur d'espace de tension de stator de consigne, et
- une unité de commutation (23) qui fournit à sa sortie des impulsions de commande générées en fonction de la vitesse de rotation soit par l'onduleur d'impulsions (7), soit par le bloc commutateur (21), soit au moyen du programme logiciel.

**8.** Dispositif selon la revendication 7, **caractérisé en ce qu'** il présente une unité de calcul (20) qui possède une entrée pour la composante de tension longitudinale (ud) déterminée, une entrée pour la composante de tension transversale (uq) déterminée et une sortie pour une information concernant l'angle de consigne ($\varepsilon$) entre l'axe polaire de rotor et l'indicateur d'espace de tension de stator de consigne.

**9.** Dispositif selon la revendication 8, **caractérisé en ce que** l'unité de calcul (20) détermine l'angle de consigne ($\varepsilon$) selon la relation suivante :

$$\varepsilon = \arctan \frac{ud}{uq} \; .$$

**10.** Dispositif selon l'une quelconque des revendications 7 à 9, **caractérisé en ce que** le bloc commutateur (21), ou le programme logiciel, est prévu pour la sélection d'un état de commutation du convertisseur parmi plusieurs.

**11.** Dispositif selon la revendication 10, **caractérisé en ce que** la sélection d'un état de commutation du convertisseur parmi plusieurs possibles s'effectue en tenant compte d'un angle de position de rotor ($\gamma$).

**12.** Dispositif selon l'une quelconque des revendications 7 à 11, **caractérisé en ce qu'** il présente un circuit d'hystérésis (22) dont le signal de sortie est transmis à l'unité de commutation (23) comme signal de commutation.

FIG. 1

FIG. 2

## FIGUR 3

## FIGUR 4

**FIG. 5**